# EUROPÄISCHE PATENTANMELDUNG

(11) **EP 0 989 769 A2**
(43) Veröffentlichungstag der Anmeldung: **29.03.2000**
(21) Anmeldenummer: 99116802.2
(22) Anmeldetag: 01.09.1999
(51) Int. Cl.: H04Q 7/38

(54) **Steuerung und Verwaltung der Erreichbarkeit von Endgeräten in einem Telekommunikationssystem**

(30) Priorität: 22.09.1998 DE 19843451
(71) Anmelder: SIEMENS AKTIENGESELLSCHAFT, 80333 München (DE)
(72) Erfinder: Rau, Helmut, 82118 Germering (DE); Kreppel, Jan, 82377 Penzberg (DE); Placho, Markus, 1200 Wien (AT)

(57) **Zusammenfassung**

Die Erfindung geht aus von einem Telekommunikationssystem mit einem öffentlichen Mobilfunknetz (PLMN) und einem Festnetz (PSTN) sowie von einem Verfahren zur Steuerung und Verwaltung der Erreichbarkeit von Endgeräten in einem solchen System. Erfindungsgemäß wird bei in Vermittlungsstellen- bzw. -einrichtungen des Fest- bzw. Mobilfunknetzes einlangenden Verbindungsanforderungen zwischen Mobilnetz-Rufnummern und Festnetz-Rufnummern unterschieden. Des Weiteren wird eine den Vermittlungsstellen bzw. -einrichtungen zugeordnete Datenbasis aufgrund einer Anfrage der Vermittlungsstellen bzw. -einrichtungen bei Vorliegen einer Mobilnetz-Rufnummer die Adresse des zugehörigen Heimatregisters zur Verfügung gestellt.

## Beschreibung

Die Erfindung bezieht sich auf ein Verfahren zur Steuerung und Verwaltung der Erreichbarkeit von Endgeräten in einem Telekommunikationssystem mit einem öffentlichen Mobilfunknetz und einem Festnetz, bei welchem zwischen dem Mobilfunknetz und dem Festnetz über eine Schnittstelle und unter Verwendung von Vermittlungseinrichtungen und zumindest eines Heimatregisters des Mobilfunknetzes und von Vermittlungsstellen des Festnetzes Verbindungen hergestellt werden.

Weiters bezieht sich die Erfindung auf ein Telekommunikationssystem mit einem öffentlichen Mobilfunknetz und einem Festnetz, bei welchem das Mobilfunknetz Vermittlungseinrichtungen und zumindest ein Heimatregister, und das Festnetz Vermittlungsstellen aufweist, und über eine Schnittstelle Kommunikationsverbindungen zwischen dem Mobilfunknetz und dem Festnetz herstellbar sind.

Nach dem derzeitigen Stand der Technik werden für die Rufnummern von Mobilteilnehmern in einem Telekommunikationsnetz eigene Rufnummernblöcke ausgewiesen, die eine Unterscheidung gegenüber den Festnetzteilnehmern aufgrund von führenden Ziffern ermöglichen. Diese Unterscheidung von Rufnummernblökken, die der eigentlichen Rufnummer vorausgestellt sind, wird jedoch zunehmend aufgelöst, was durch die Forderung beispielsweise nach einem 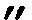 One-Number-Service", bei dem lediglich eine Rufnummer für Mobil- und Drahtanschluß vorliegt, oder nach der 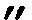 Number-Portability", bei welcher ein Teilnehmer unter Beibehaltung seiner bisherigen Festnetz-Rufnummer mobil werden kann, bedingt ist. Wenn ein ankommender Ruf zu einem Mobilteilnehmer mit beliebiger, nicht von vorne herein durch Rufnummernblöcke gekennzeichneter Rufnummer weitergeleitet werden soll, ergeben sich verschiedene Probleme, die insbesondere zu einem meist ungünstigen Routing- und Administrationsaufwand führen. Man kann das Problem über Dienst 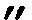 Call-Forwarding" lösen, wobei der Teilnehmer neben seiner Festnetz-Rufnummer noch zusätzlich eine verborgene, d.h. nicht veröffentlichte Mobilitätsrufnummer besitzt. Der Teilnehmer kann dann ein Call-Forwarding von seinem Draht-Anschluß auf seine Mobil-Rufnummer einrichten, dabei ergibt sich neben dem ungünstigen Routing auch der Nachteil, daß die Mobilrufnummer nicht tatsächlich verborgen ist, da sie als Rufnummer bei abgehenden Rufen vom Mobilanschluß aus eingesetzt wird. Darüber hinaus muß der Teilnehmer aktiv werden, d.h. den Dienst 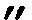 Call-Forwarding" selbst eingeben und auch einen Festnetz-Anschluß neben seinem Mobil-Anschluß besitzen, was zwar meistens der Fall ist, jedoch nicht immer gilt. Beispielsweise kann der Teilnehmer seinen Festnetz-Anschluß vollständig aufgeben und den Wunsch haben, unter Beibehaltung seiner Festnetz-Rufnummer auf einen mobilen Anschluß desselben oder eines anderen Netzbetreibers zu wechseln.

Es ist daher eine Aufgabe der Erfindung, eine Lösung für die Weitergabe von einlangenden Rufen an Mobilnetzteilnehmer zu finden, welche für allgemeine Rufnummernstrukturen gilt und nicht beispielsweise eine geographische Rufnummernstruktur vorrausetzt, bei welcher ein direktes Routing durchgeführt werden kann.

Diese Aufgabe wird mit einem Verfahren der eingangs genannten Art gelöst, bei welchem erfindungsgemäß bei in Vermittlungsstellen bzw. -einrichtungen des Fest- bzw. Mobilfunknetzes einlangenden Verbindungsanforderungen zwischen Mobilnetz-Rufnummern und Festnetz-Rufnummern unterschieden wird, und eine den Vermittlungsstellen bzw. -einrichtungen zugeordnete Datenbasis aufgrund einer Anfrage der Vermittlungsstellen bzw. -einrichtungen bei Vorliegen einer Mobilnetz-Rufnummer die Adresse des zugehörigen Heimatregisters zur Verfügung gestellt wird.

Dank der Erfindung ist eine geographische Strukturierung der Rufnummern nicht mehr erforderlich, und das bei den bisherigen Lösungen auftretende, ungünstige Routing entfällt.

Es ist günstig, wenn die Unterscheidung zwischen Mobilnetzund Festnetz-Rufnummer aufgrund der Abfrage der Datenbasis erfolgt, da die Datenbasis sämtliche, immer wieder aktualisierte Informationen leicht zugänglich enthält.

Andererseits kann es ökonomisch sein, wenn die Unterscheidung zwischen Mobilnetz- und Festnetz-Rufnummern aufgrund einer Wählziffernanalyse in den Vermittlungsstellen bzw. -einrichtungen erfolgt.

Es ist von Vorteil, wenn die Datenbasis eine Rufnummernliste mit Adreßeinträgen enthält, da auf diese Weise einfach und rasch eine Erkennung der entsprechenden Adresse möglich ist.

Weiters ist es günstig, wenn die Adresse des Heimatregisters der eigentlichen Teilnehmer-Rufnummer als Präfix vorangestellt wird, da ein solches leicht erkennbar und abfragbar ist. Dabei ist es günstig, wenn die Vermittlungsstelle im Zuge einer Ziffernbewertung bei Vorliegen einer Heimatregisteradresse in eine Routing-Information an das Heimatregister lediglich die eigentliche Teilnehmer-Nummer einträgt. Auch kann dabei die Vermittlungsstelle im Zuge der Ziffernbewertung einen Zusatzparameter erstellen, welcher die Anzahl der zu streichenden Stellen des Präfix angibt, da in die sogenannte MAP-Nachricht (Send Routing Info) nur die eigentliche Teilnehmer-Rufnummer eingetragen werden darf.

Das Verfahren nach der Erfindung eignet sich auch besonders, wenn das Festnetz das Leistungsmerkmal 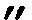 Rufnummern-Portie-rung" zur Verfügung stellt.

Zur Ausdehnung des erfindungsgemäßen Verfahrens auf mobile Teilnehmer eines privaten Netzes ist es zweckmäßig, wenn die Rufnummernliste auch Durchwahl-Nummern eines privaten Netzes enthält.

Die gestellte Aufgabe wird auch mit einem Telekommunikationssystem der oben erwähnten Art gelöst, bei welchem den Vermittlungsstellen bzw. -einrichtungen eine Datenbasis zugeordnet ist, die dazu eingerichtet ist, bei Vorliegen einer Mobilnetz-Rufnummer die Adresse des zugehörigen Heimatregisters zur Verfügung zu stellen.

Es kann auch günstig sein, wenn die Vermittlungsstellen bzw. -einrichtungen mit der Datenbasis dazu eingerichtet sind, aufgrund einer Abfrage der Datenbasis zwischen Mobilnetz- und Festnetz-Rufnummern zu unterscheiden.

Auch ist es in anderen Fällen ökonomisch, wenn die Vermittlungsstellen bzw. -einrichtungen zur Unterscheidung zwischen Mobilnetz- und Festnetz-Rufnummern durch eine Wählziffernanalyse eingerichtet sind.

Dabei enthält die Datenbasis vorteilhafterweise eine Rufnummernliste mit Adreßeinträgen.

Auch kann die Adresse des Heimatregisters der eigentlichen Teilnehmer-Rufnummer als Präfix vorangstellt sein, wobei die Vermittlungsstelle dazu eingerichtet ist, im Zuge einer Ziffernbewertung bei Vorliegen einer Heimatregisteradresse in eine Routing-Information an das Heimatregister lediglich die eigentliche Teilnehmer-Rufnummer einzutragen. Auch empfiehlt es sich in diesem Falle, wenn die Vermittlungsstelle dazu eingerichtet ist, im Zuge der Ziffernbewertung einen Zusatzparameter zu erstellen, der die Anzahl der zu streichenden Stellen des Präfix angibt.

Weiters ist es zweckmäßig, falls das Festnetz das Leistungsmerkmal 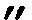 Rufnummern-Portierung" aufweist.

Um den Zugang zur Teilnahme eines privaten Netzes zu ermöglichen, ist es zweckmäßig, wenn die Rufnummernliste auch Durchwahlnummern eines privaten Netzes enthält.

Die mit den Merkmalen des erfindungsgemäßen Telekommunikationssystems erzielbaren Vorteile wurden bereits im Zusammenhang mit dem erfindungsgemäßen Verfahren genannt.

Die Erfindung samt weiterer Vorteile ist im folgenden anhand beispielsweiser Ausführungsformen näher erläutert, die in der Zeichnung veranschaulicht sind.

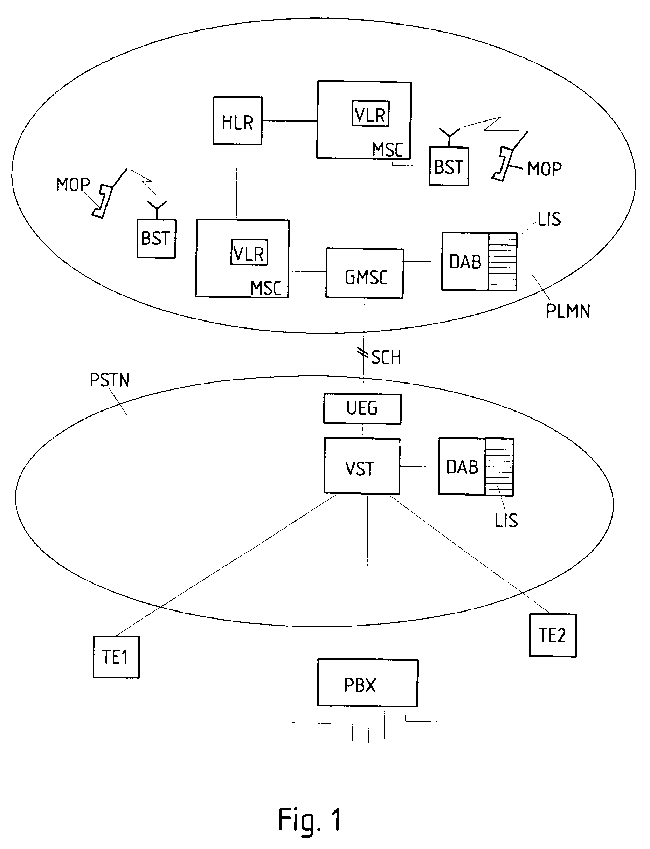

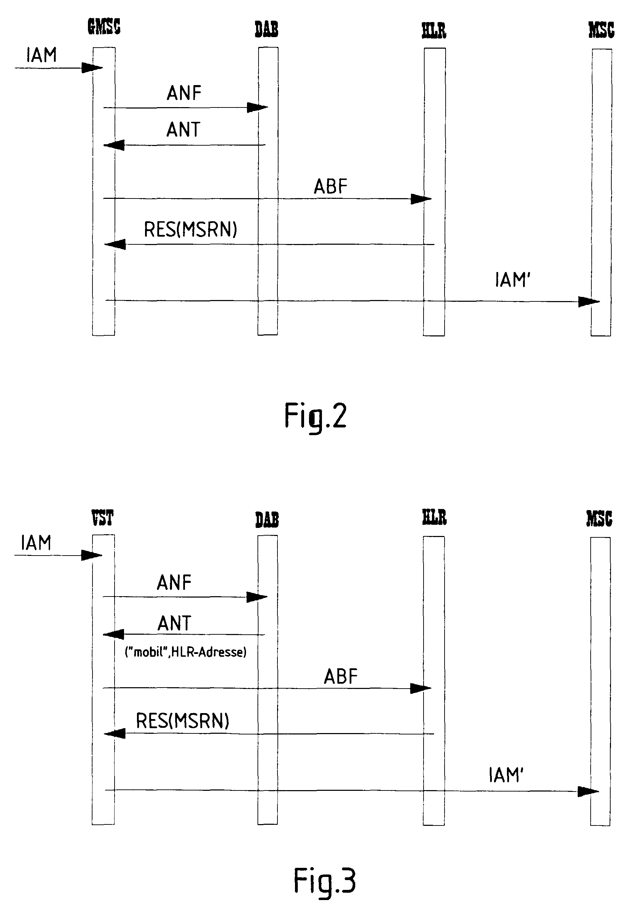

In dieser zeigen
■ Fig. 1 schematisch die Struktur eines Telekommunikationssystems mit einem Mobilfunknetz, einem Festnetz und einem privaten Netz,
■ Fig. 2 den prinzipiellen Ablauf des erfindungsgemäßen Verfahrens bei einer ankommenden Rufzustellung zu einem Mobilteilnehmer mit beliebiger Rufnummer aus dem Festnetzbereich, und
■ Fig 3 eine zu Fig. 2 ähnliche Darstellung, bei welcher die Rufzustellung an einen Teilnehmer eines privaten Netzes erfolgen soll.

Ein beispielhaftes, zur Erklärung der Erfindung dienendes Szenario ist in Fig. 1 dargestellt. Ein Festnetz PSTN, z.B. hier ein ISDN-Netz, besitzt Vermittlungsstellen, auch als Vermittlungsknoten bezeichenbar, von welchen eine Vermittlungsstelle VST eingezeichnet ist. Von dieser Vermittlungsstelle VST laufen Verbindungen zu Festnetz-Teilnehmern oder Endstellen TE1, TE2, von welchen nur zwei gezeichnet sind, bzw. zu einem privaten Netz PBX. Eine Datenbank DAB ist jeder Vermittlungsstelle VST zugeordnet.

Ein Mobilfunknetz PLMN, z.B. ein GSM-Netz, besitzt zum Zwecke der Vernetzung zwischen den beiden Netzen eine Übergangsvermittlung GMSC (Gateway Mobile Switching Center), welcher im Festnetz PSTN ein Übergangsamt VEG entspricht. Über die zugehörige Schnittstelle sind Verbindungen über die Netzgrenzen hinaus herstellbar.

Basisstationen BST des Mobilnetzes PLMN sind in bekannter Weise Vermittlungseinrichtungen MSC (Mobile Switching Center) mit Besucherregistern VLR beigestellt. Ebenso ist ein Heimatregister HLR in dem Mobilfunknetz PLMN enthalten. Innerhalb der Funkzellen des Mobilnetzes PLMN stehen Mobilteile MOP ( 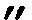 Handys") mit den Basisstationen BST über Funkschnittstellen in Verbindung.

Im folgenden wird davon ausgegangen, daß die Teilnehmer-Rufnummern nicht geographisch strukturiert und somit sofort hinsichtlich einer Zuordnung zu einem Mobil- oder Festnetz unterscheidbar sind, sondern daß beliebige Rufnummern vorliegen. Wenn - nun unter Bezugnahme auf Fig. 1 und 2 - eine Rufanforderng mit einer Adreßnachricht IAM (Initial Address Message) in der Übergangsvermittlung GMSC des Mobilfunknetzes PLMN einlangt, erfolgt erfindungsgemäß eine Anfrage ANF an die Datenbasis DAB. Diese stellt anhand der Liste LIS fest, ob die Rufnummer zu einem Mobilfunknetz gehört oder nicht. Falls die Rufnummer einem Mobilfunknetz zugeordnet ist, wird aus der Datenbank DAB bzw. der Liste LIS auch die Heimatregister-Adresse festgestellt, wobei die Antwort ANT an die Übergangsvermittlung GMSC die beiden oben genannten Informationen enthält. Die Heimatregister-Adresse kann dabei als Rufnummern-Präfix der Teilnehmernummer vorangestellt werden, wie dies üblicherweise mit Portierungskennungen erfolgt. Die Auswertung der Antwort ANT in der Vermittlung GMSC führt dann zu einer Abfrage ABF des Heimatregisters HLR, welche die Aufforderung zur Zusendung einer Routing-Information enthält. In die MAP-Nachricht an das Heimatregister HLR darf üblicherweise nur die eigentliche Rufnummer, unter welcher der Teilnehmer in dem Heimatregister abgelegt ist, eingetragen werden. Aus diesem Grund enthält das Ziffernumwerteergebnis ( 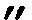 HLR-Interrogation") einen zusätzlichen Parameter, der aussagt, wieviel Präfix-Digits zu streichen sind.

Das bei der Vermittlung GMSC seitens des Heimatregisters HLR einlangende Ergebnis RES enthält nun die Mobile Station Roaming Number MSRN und in der Folge wird eine Adreßnachricht IAM' an die Bestimmungsvermittlung MSC (Mobile Switching Center) gesandt.

Es ist hier anzumerken, daß die Erfindung da Merkmal 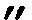 Rufnummernportierung" im Netz nicht voraussetzt. Ohne dieses Merkmal dient die Datenbankabtrage ausschließlich dazu, die Mobil-Rufnummern von den Festnetz-Rufnummern zu unterscheiden. Es werden dann nur die Mobil-Rufnummern mit dem Heimatregister-Präfix versehen bzw die Heimatregister-Adresse wird als zusätzliches Ergebnis geliefert.

Nun wird im besonderen auf Fig. 3 Bezug genommen, welche den Fall betrifft, daß sich in dem angewählten Rufnummernbereich eines privaten Netzes PBX mobile Teilnehmer verbergen.

Eine bei einer Vermittlungsstelle VST einlangende Rufanforderung mit einer Adreßnachricht IAM wird sofort einer Ziffernanalyse unterzogen. Falls diese ergibt, daß der angewählte Bereich ein solcher mit mobilen Teilnehmern ist, sodaß eine Datenbankabtrage erforderlich ist, erfolgt die entsprechende Anfrage ANF an eine Datenbasis DAB, in welcher anhand der gespeicherten Teilnehmernummern und deren Zuordnungen festgestellt wird, ob die angewählte Rufnummer der Benutzer vom Typ 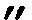 mobil" ist, wobei in diesem Fall auch die entsprechende Adresse des Heimatregisters HLR in der Antwort ANT mitgeliefert wird. Die Informationen 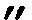 mobil" und die Heimatregisteradresse können auch in Form von der PBX-Rufnummer vorangestellten Präfix-Digits geliefert werden. In diesem Fall müßte eine Vermittlungsstelle VST des Festnetzes PSTN nicht selbst die Heimatregisterabtrage über MAP ( 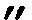 Send-Routing-Info") durchführen, sondern sie könnte den Ruf zunächst Richtung Mobilnetz PLMN weiterleiten.

Das eigenständige Mobilnetz verwaltet in diesem Fall neben den 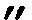 echten" Mobilteilnehmern lediglich Mobilteilnehmer unter Festnetztelefonnummern.

Aufgrund der Antwort ANT wird sodann seitens der Vermittlungsstelle VST eine Anfrage ABF des Heimatregisters HLR durchgeführt. Das bei der Vermittlungsstelle VST einlangende Ergebnis RES enthält nun die Mobilrufnummern MSRN, und eine Adreßnachricht wird an die Bestimmungsvermittlung MSC gesandt, was bereits im Zusammenhang mit Fig. 2 angegeben wurde.

Würde der Ruf an einen mobilen Teilnehmer in der 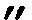 Heimat"-PBX (privates Netz) entstehen, wo lediglich die Nummer der Nebenstelle gewählt wird, so würde das private Netz PBX, welches erkennt, daß die gewählte Nebenstellennummer tatsächlich kein eigener Teilnehmer ist, z.B. die Landes- und Bezirksvorwahlen vor die Nebenstellennummern setzen, und den Ruf in das öffentliche Netz weiterleiten.

## Patentansprüche

1. Verfahren zur Steuerung und Verwaltung der Erreichbarkeit von Endgeräten in einem Telekommunikationssystem mit einem öffentlichen Mobilfunknetz (PLMN) und einem Festnetz (PSTN), bei welchem zwischen dem Mobilfunknetz und dem Festnetz über eine Schnittstelle und unter Verwendung von Vermittlungseinrichtungen (MSC) und zumindest eines Heimatregisters (HLR) des Mobilfunknetzes und von Vermittlungsstellen (VST) des Festnetzes Verbindungen hergestellt werden,
**dadurch gekennzeichnet**,
daß bei in Vermittlungsstellen bzw. -einrichtungen (VST, GMSC) des Fest- bzw. Mobilfunknetzes (PSTN, PLMN) einlangenden Verbindungsanforderungen zwischen Mobilnetz-Rufnummern und Festnetz-Rufnummern unterschieden wird, und daß eine den Vermittlungsstellen bzw. -einrichtungen zugeordnete Datenbasis (DAB) aufgrund einer Anfrage der Vermittlungsstellen bzw. -einrichtungen bei Vorliegen einer Mobilnetz-Rufnummer die Adresse des zugehörigen Heimatregisters zur Verfügung gestellt wird.

2. Verfahren nach Anspruch 1,
**dadurch gekennzeichnet**, daß die Unterscheidung zwischen Mobilnetz- und Festnetz-Rufnummer aufgrund der Abfrage der Datenbasis (DAB) erfolgt.

3. Verfahren nach Anspruch 1,
**dadurch gekennzeichnet**, daß die Unterscheidung zwischen Mobilnetz- und Festnetz-Rufnummern aufgrund einer Wählziffernanalyse in den Vermittlungsstellen bzw. -einrichtungen (VST, GMSC) erfolgt.

4. Verfahren nach einem der Ansprüche 1 bis 3,
**dadurch gekennzeichnet**, daß die Datenbasis (DAB) eine Rufnummernliste (LIS) mit Adreßeinträgen enthält.

5. Verfahren nach einem der Ansprüche 1 bis 4,
**dadurch gekennzeichnet**, daß die Adresse des Heimatregisters (HLR) der eigentlichen Teilnehmer-Rufnummer als Präfix vorangestellt wird.

6. Verfahren nach Anspruch 5,
**dadurch gekennzeichnet**, daß die Vermittlungsstelle (VST) im Zuge einer Ziffernbewertung bei Vorliegen einer Heimatregisteradresse in eine Routinginformation an das Heimatregister (HLR) lediglich die eigentliche Teilnehmernummer einträgt.

7. Verfahren nach Anspruch 6,
**dadurch gekennzeichnet**, daß die Vermittlungsstelle (VST) im Zuge der Ziffernbewertung einen Zusatzparameter erstellt, welcher die Anzahl der zu streichenden Stellen des Präfix angibt.

8. Verfahren nach einem der Ansprüche 1 bis 7,
**dadurch gekennzeichnet**, daß das Festnetz (PSTN) das Leistungsmerkmai 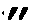 Rufnummernportierung" zur Verfügung stellt.

9. Verfahren nach einem der Ansprüche 4 bis 8,
**dadurch gekennzeichnet**, daß die Rufnummernliste (LIS) auch Durchwahlnummern eines privaten Netzes (PBX) enthält.

10. Telekommunikationssystem mit einem öffentlichen Mobilfunknetz (PLMN) und einem Festnetz (PSTN), bei welchem das Mobilfunknetz Vermittlungseinrichtungen (MSC) und zumindest ein Heimatregister (HLR), und das Festnetz Vermittlungsstellen (VST) aufweist, und über eine Schnittstelle Kommunikationsverbindungen zwischen dem Mobilfunknetz und dem Festnetz herstellbar sind,
**dadurch gekennzeichnet**,
daß den Vermittlungsstellen bzw. -einrichtungen (VST, GMSC) eine Datenbasis (DAB) zugeordnet ist, die dazu eingerichtet ist, bei Vorliegen einer Mobilnetz-Rufnummer die Adresse des zugehörigen Heimatregisters (HLR) zur Verfügung zu stellen.

11. Telekommunikationssystem nach Anspruch 10,
**dadurch gekennzeichnet**, daß die Vermittlungsstellen bzw. -einrichtungen (VST, GMSC) mit der Datenbasis (DAB) dazu eingerichtet sind, aufgrund einer Abfrage der Datenbasis zwischen Mobilnetz-Rufnummern und Festnetz-Rufnummern zu unterscheiden.

12. Telekommunikationssystem nach Anspruch 10,
**dadurch gekennzeichnet**, daß die Vermittlungsstellen bzw. -einrichtungen (VST, GMSC) zur Unterscheidung zwischen Mobilnetz- und Festnetz-Rufnummern durch eine Wählziffernanalyse eingerichtet sind.

13. Telekommunikationssystem nach einem der Ansprüche 10 bis 12,
**dadurch gekennzeichnet**, daß die Datenbasis (DAB) eine Rufnummernliste (LIS) mit Adreßeinträgen (ADR) enthält.

14. Telekommunikationssystem nach einem der Ansprüche 10 bis 13,
**dadurch gekennzeichnet**, daß die Adresse des Heimatregisters (HLR) der eigentlichen Teilnehmer-Rufnummer als Präfix vorangestellt ist.

15. Telekommunikationssystem nach Anspruch 14,
**dadurch gekennzeichnet**, daß die Vermittlungsstelle (VST) dazu eingerichtet ist, im Zuge einer Ziffernbewertung bei Vorliegen einer Heimatregisteradresse in eine Routineinformation an das Heimatregister (HLR) lediglich die eigentliche Teilnehmer-Rufnummer einzutragen.

16. Telekommunikationssystem nach Anspruch 15,
**dadurch gekennzeichnet**, daß die Vermittlungsstelle (VST) dazu eingerichtet ist, im Zuge der Ziffernbewertung einen Zusatzparameter zu erstellen, der die Anzahl der zu streichenden Stellen des Präfix angibt.

17. Telekommunikationssystem nach einem der Ansprüche 10 bis 16,
**dadurch gekennzeichnet**, daß das Festnetz (PSTN) das Leistungsmerkmal 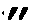 Rufnummernportierung" aufweist.

18. Telekommunikationssystem nach einem der Ansprüche 13 bis 17,
**dadurch gekennzeichnet**, daß die Rufnummernliste (LIS) auch Durchwahlnummern eines privaten Netzes (PBX) enthält.
